# EUROPÄISCHE PATENTSCHRIFT

(11) **EP 1 208 305 B1**
(45) Veröffentlichungstag und Bekanntmachung des Hinweises auf die Patenterteilung: **06.05.2004**
(21) Anmeldenummer: 00956467.5
(22) Anmeldetag: 19.08.2000
(51) Int. Cl.: F16B 2/06

(54) **TRÄGERKLEMME**
ARRESTING DEVICE FOR SUPPORT
PINCE POUR ELEMENT DE SUPPORT

(30) Priorität: 03.09.1999 DE 29915435 U
(43) Veröffentlichungstag der Anmeldung: 29.05.2002
(73) Patentinhaber: HALFEN GmbH & CO. Kommanditgesellschaft, 40764 Langenfeld-Richrath (DE)
(72) Erfinder: KIRCHNER, Georg, D-42697 Solingen (DE); NEUMANN, Renate, D-40595 Düsseldorf (DE)
(74) Vertreter: Riedel, Peter
(86) Internationale Anmeldenummer: PCT/EP2000/008112
(87) Internationale Veröffentlichungsnummer: WO 2001/018407

(56) Entgegenhaltungen:
- EP-A- 0 431 209
- CH-A- 387 674
- FR-A- 1 019 910
- GB-A- 143 495
- GB-A- 1 530 463
- US-A- 2 875 954
- US-A- 3 799 437
- US-A- 4 819 869

## Beschreibung

Die Erfindung betrifft eine Trägerklemme zur Montage von Schienen, Trägern, Verbindungsteilen und dergleichen der im Oberbegriff des Anspruchs 1 angegebenen Gattung.

Zur Montage von Schienen, Trägern, Verbindungsteilen und dergleichen sind eine Vielzahl von Klemmplatten, Spannpratzen, Klauen usw. bekannt, die entweder als Universalklemme oder auf den jeweiligen Verbindungsfall speziell abgestimmt ausgeführt sind. Eine solche Trägerklemme besteht im allgemeinen aus einer Klemmplatte und einem Spannelement. Die Klemmplatte umfaßt einen Nocken zur Abstützung auf einem Bauteil und einen Spannabschnitt, beispielsweise zum Einspannen eines Flansches, und einen zwischen Nocken und Spannabschnitt gebildeten Sattel. Am Sattel wird im allgemeinen das Spannmittel aufgenommen.

Mit den üblichen Trägerklemmen wird eine hohe Flächenpressung zwischen dem Spannabschnitt und dem Flansch eines Trägers erreicht, jedoch ist bei Nachlassen der Spannkraft ein Widerstand gegen das Verrutschen in Querrichtung kaum noch gegeben. Es wurde daher bereits vorgeschlagen, die Spannfläche mit einer Verrillung zu versehen, Versuche haben jedoch ergeben, daß auch hiermit keine nennenswerte Verbesserung bezüglich der Haltekraft in Querrichtung zu erzielen ist. Bei solchen Trägerklemmen ist der Widerstand gegen das Verrutschen abhängig von der Flächenpressung nicht sicher definiert. Die Lastabtragung ist von sehr vielen Unbekannten abhängig wie Reibzahl an dem Bauteil im Gewinde, Einhaltung des Anzugsdrehmomentes etc.

In der US 4,819,869 ist eine Vorrichtung zur Befestigung von Eisenbahnschienen auf Holzschwellen beschrieben. Dabei ist eine die Schiene auf der Holzschwelle abstützende Platte vorgesehen, die mittels Schraubankern auf der Holzschwelle befestigt ist. Um die Schiene auf der Platte zu sichern, sind Niederhalteelemente zu beiden Seiten der Schiene vorgesehen, welche sich mit einem Nocken auf der Platte und mit einem Spannabschnitt auf dem Schienenfuß abstützen, wobei am Spannabschnitt zwei in den Spannabschnitt eingebettete Stahlspitzen vorgesehen sind. Die Niederhalteelemente sind mit Schraubankern, die in Hülsen in der Holzschwelle geschraubt sind, befestigt. Eine solche Anordnung ist nur begrenzt verwendbar.

Der vorliegenden Erfindung liegt die Aufgabe zugrunde, eine Trägerklemme der im Oberbegriff des Anspruchs 1 genannten Gattung zu schaffen, die einfach herstellbar und universell für verschiedene Verbindungsanordnungen einsetzbar ist.

Diese Aufgabe wird durch eine Trägerklemme mit den Merkmalen des Anspruchs 1 gelöst.

Erfindungsgemäß ist der Stift aus einem härteren Material hergestellt als die Klemmplatte und als Madenschraube ausgebildet, die durch Verpressen mit dem Material des Spannabschnitts befestigt ist. Der Stift kann in einer Gewindebohrung des Spannabschnitts gehalten sein. Diese Madenschraube kann an dem der Spitze entlegenen Ende mit einem Innensechskant zur Aufnahme eines entsprechenden Werkzeugs versehen sein. Die Stifte können entweder in einer Durchgangsbohrung, einem Sackloch oder einer Stufenbohrung aufgenommen werden.

Als besonders zweckmäßig wird es angesehen, daß zwei in einem Abstand angeordnete Stifte vorgesehen sind, deren Spitzen mindestens annähernd gleich weit aus dem Spannabschnitt hervorstehen. Auf diese Weise ist auch ein annähernd gleichmäßiges Eindringen der Spitzen und eine gleichmäßige Kraftverteilung gewährleistet.

In dem Sattel sollte mindestens eine öffnung zum Durchtritt eines Zugankers vorgesehen sein, wobei diese öffnung zweckmäßigerweise als Langloch gestaltet ist. Als besonders vorteilhaft wird angesehen, daß drei Öffnungen vorhanden sind, so daß je nach zu montierender Schiene bzw. Träger wahlweise ein oder zwei Zuganker symmetrisch eingesetzt werden können. Bei Klemmplatten mit drei Öffnungen ist es auch möglich, bügelförmige Spannelemente mit unterschiedlichem Schenkelabstand einzusetzen.

Um auf einfache Weise eine Anpassung an die Flanschform und Flanschdicke zu gewährleisten, muß die Klemmplatte in der Lage sein, verschiedene Winkel, bezogen auf das Spannelement, einzunehmen. Damit die Krafteinleitung vom Spannelement auf die Klemmplatte unabhängig von der Lage möglichst gleich unbeeinflußt ist, wird vorgeschlagen, daß der Sattel an seiner Oberseite als konkave Mulde bzw. konvex nach außen gewölbt ausgestaltet ist und in dieser Mulde bzw. auf dieser Wölbung eine Kalotte oder eine Spannleiste mit angepaßter Oberfläche liegt.

Ausführungsbeispiele der Erfindung sind nachstehend anhand der Zeichnung näher erläutert. In der Zeichnung zeigt:
- Fig. 1: eine Draufsicht auf eine Klemmplatte,
- Fig. 2: einen Schnitt entlang der Linie II-II in Fig. 1,
- Fig. 3: einen Schnitt entlang der Linie III-III in Fig. 1,
- Fig. 4: eine Ansicht in Richtung des Pfeiles IV in Fig. 3,
- Fig. 5: eine Ausführungsvariante zu Fig. 1 mit lediglich einer öffnung zur Aufnahme eines Spannelementes,
- Fig. 6: einen Schnitt entlang der Linie VI-VI in Fig. 5,
- Fig. 7 bis 10: Darstellungen einer Trägerklemme zum Einspannen unterschiedlich gestalteter Flansche,
- Fig. 11: einen Spannbügel als Einzelteil,
- Fig. 12a bis 12c: unterschiedliche Ansichten einer Kalotte,
- Fig. 13a bis 13c: unterschiedliche Ansichten einer Spannleiste,
- Fig. 14: eine Ausführungsvariante zu Fig. 1 mit verschiedenen Möglichkeiten der Lage von Spannmitteln,
- Fig. 15: eine Ausführungsvariante zu Fig. 8,
- Fig. 16: unterschiedliche Ausführungen von Stiften und deren Befestigung im Spannabschnitt der Klemmplatte sowie unterschiedliche Ausführungen der Spitzen,
- Fig. 17: eine Ausführungsvariante zu Fig. 5 zur Verwendung an Profilen unterschiedlicher Breite,
- Fig. 18: einen Schnitt entlang der Linie XXII-XXII in Fig. 17,
- Fig. 19: eine Ansicht in Richtung des Pfeiles XXIII in Fig. 17.

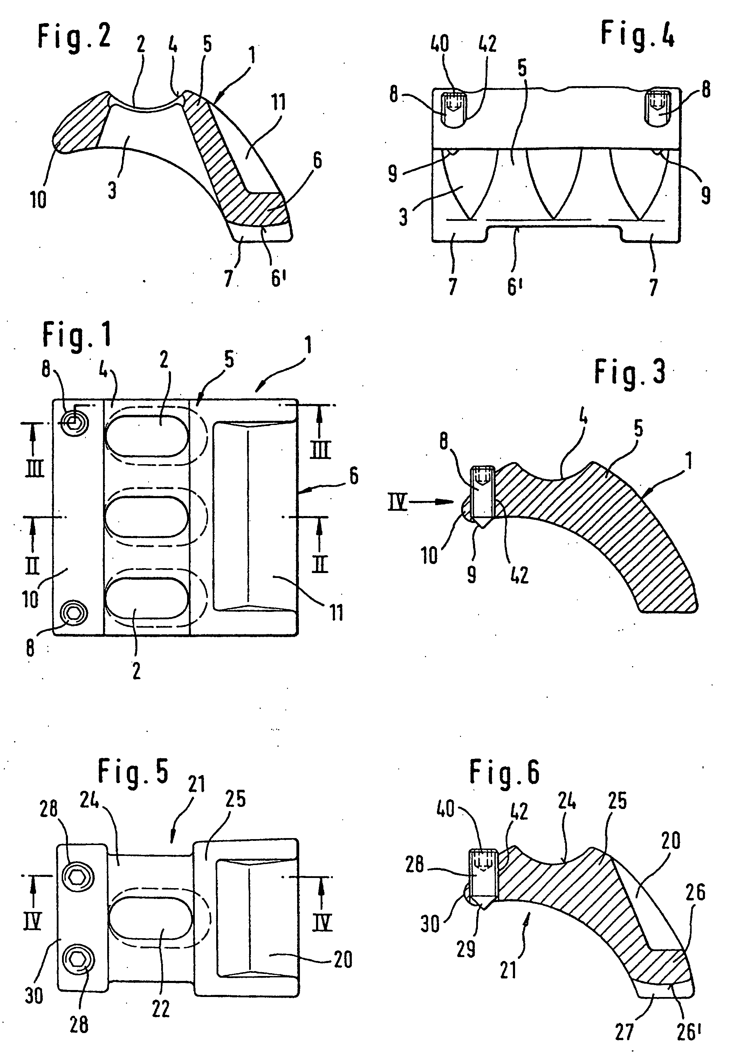

In den Fig. 1 bis 4 ist eine Klemmplatte 1 dargestellt, die einen Nocken 6, einen Spannabschnitt 10 und einen dazwischen befindlichen Sattel 5 umfaßt. Im Bereich des Sattels 5 sind drei Langlöcher 2 angeordnet, deren Längsachsen parallel zueinander verlaufen. An der Oberseite des Sattels 5 befindet sich eine konkave Mulde 4. Die Unterseite der Klemmplatte 1 ist als Bogen gestaltet, wobei vom Langloch 2 zu dem Bogen hin eine konische Erweiterung 3 vorgesehen ist. Auf der zum Nocken 6 gewandten Seite des Sattels 5 ist die Klemmplatte 1 mit einer Vertiefung 11 versehen. Am unteren Ende des Nockens 6 befindet sich eine Lagerfläche 6', an der ein zu verbindendes Bauteil anliegt. Jeweils seitlich neben der Lagerfläche 6' befinden sich Vorsprünge 7, so daß ein an der Lagerfläche 6' aufgenommenes Bauteil seitlich übergriffen wird. In dem Spannabschnitt 10 befinden sich Stifte 8, die mit einer Spitze 9 versehen sind, welche auf der Unterseite des Spannabschnitts 10 hervorstehen.

Die Fig. 5 und 6 zeigen eine Klemmplatte 21, die lediglich ein einziges Langloch 22 aufweist. An der Oberseite eines Sattels 25 ist eine konkave Mulde 24 vorgesehen. Zu einem Nocken 26 hin ist der Sattel 25 mit einer Vertiefung 20 versehen. Die Unterseite des Nockens 26 ist als Lagerfläche 26' ausgebildet mit neben der Lagerfläche befindlichen Vorsprüngen 27. Am anderen Ende der Klemmplatte 21 befindet sich ein Spannabschnitt 30, in dem zwei Stifte 28 mit einer daran angeformten Spitze 29 gehalten sind.

In den Ausführungsbeispielen der Fig. 1 bis 6 sind die Stifte 8 bzw. 28 als Madenschrauben ausgebildet mit einem Innensechskant 40 an dem der Spitze 9 bzw. 29 entlegenen Ende der Madenschraube. Diese Madenschraube ist jeweils in einer Gewindebohrung 42 in den Spannabschnitten 10, 30 gehalten.

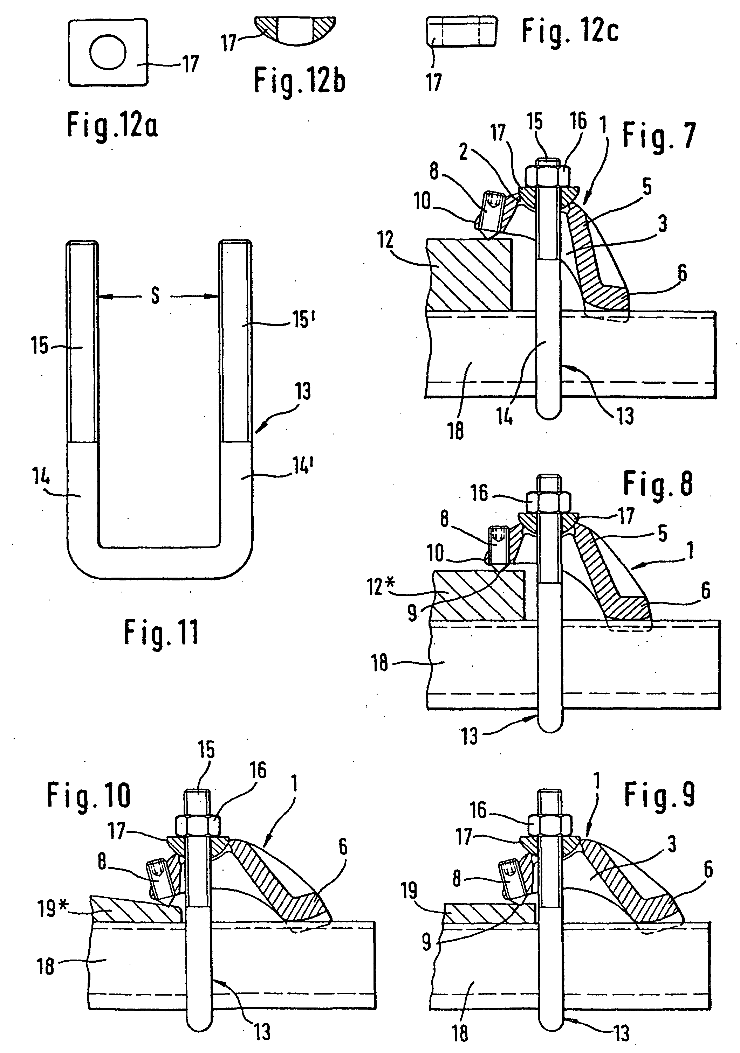

Die Fig. 7 bis 10 zeigen, daß die aus der Klemmplatte 1 und einem Spannbügel 13 gebildete Trägerklemme zum Befestigen unterschiedlicher Träger und Flansche geeignet ist. Der Spannbügel 13 ist als Einzelteil in Fig. 11 dargestellt. Dieser Spannbügel 13 besitzt zwei parallel zueinander verlaufende Schenkel 14 und 14', wobei jeder dieser Schenkel 14, 14' mit einem Gewindeabschnitt 15, 15' versehen ist. Der Abstand S, den die Schenkel 14, 14' zueinander haben, wird durch das jeweilige Maß bzw. den Abstand der Langlöcher 2 in der Klemmplatte 1 bestimmt. Zwischen den Schenkeln 14, 14' wird eine Schiene 18 aufgenommen, die mit einem Träger 12 (Fig. 7) oder 12* (Fig. 8) zu verbinden ist. Wie aus den Fig. 7 und 8 deutlich wird, weisen die Träger 12 und 12* unterschiedliche Dicken auf. Mit Hilfe der Klemmplatte 1 kann jedoch ohne jede Änderung die Verbindung unabhängig von der jeweiligen Dicke des Trägers 12, 12* erfolgen, da zum einen die Lage der Klemmplatte 1, bezogen auf den Spannbügel 13, variabel ist und durch die Kontur der Lagerfläche 6' stets eine geeignete Anlage des Nockens 6 auf der Schiene 18 gegeben ist. Auch die Spitze 9 des Stiftes 8 kann in beiden Lagen der Klemmplatte 1 in die Oberfläche des Trägers 12 bzw. 12* eindringen.

Die Fig. 9 und 10 zeigen die Klemmplatte 1 am Beispiel eingespannter Schienenflansche, wobei in Fig. 9 ein gerader Flansch 19 und in Fig. 10 ein schräger Flansch 19* dargestellt ist. In den Fig. 7 bis 10 ist zur geeigneten Abstützung einer auf die im Gewindeabschnitt 15 gedrehten Spannmutter 16 eine Kalotte 17 vorgesehen, deren kugelabschnittförmige Oberfläche stets für eine geeignete Anlage und Krafteinleitung in den Sattel 5 der Klemmplatte 1 dient.

Die Kalotte 17 ist in Fig. 12 in drei verschiedenen Ansichten dargestellt, wobei Fig. 12a eine Draufsicht, Fig. 12b einen Schnitt und Fig. 12c eine Seitenansicht der Kalotte 17 zeigen.

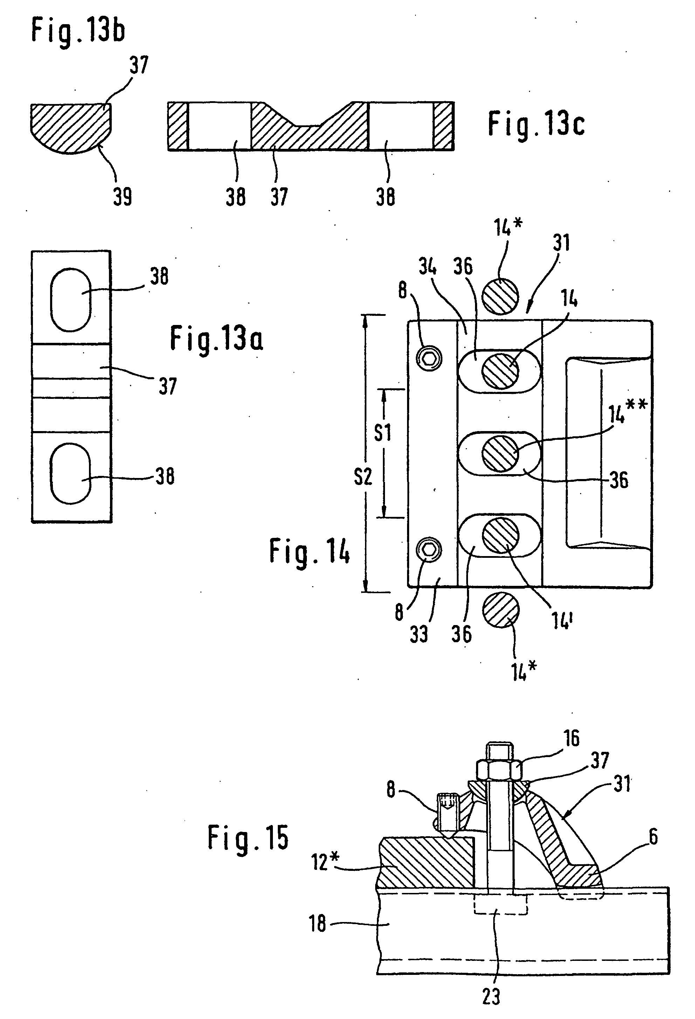

Anstelle von einzelnen Kalotten kann auch eine Spannleiste 37 vorgesehen werden, wie diese in Fig. 13 dargestellt ist. Dabei zeigt Fig. 13a die Draufsicht auf die Spannleiste 37, die zwei Langlöcher 38 aufweist. Wie Fig. 13b zeigt, ist der Querschnitt der Spannleiste 39 von der Gestalt, daß die Oberseite der Spannleiste 37 eben und die Unterseite zylinderabschnittförmig gestaltet ist, das heißt, an der Unterseite ist eine Wölbung 39 vorgesehen. Die Fig. 13c zeigt einen Längsschnitt durch die Spannleiste 37 mit den beiden Langlöchern 38. Die Langlöcher 38 ermöglichen die Aufnahme von Spannmitteln in unterschiedlichen Abständen, das heißt, auch Spannbügel mit unterschiedlichem Abstand der parallelen Schenkel können in den Langlöchern 38 aufgenommen werden, alternativ können auch Rundlöcher vorgesehen sein.

Die Fig. 14 zeigt die Draufsicht auf eine Klemmplatte 31, die im wesentlichen derjenigen entspricht, die in Fig. 1 dargestellt ist. Insofern sind sowohl der Nocken 6 als auch der Spannabschnitt 33 mit den darin enthaltenen Stiften 8 gleich. Die Klemmplatte 31 weist eine zylinderabschnittförmige Vertiefung 34 auf, in der drei parallele Langlöcher 36 angeordnet sind. In Fig. 14 sind mehrere Positionen von Spannelementen als Beispiel dargestellt, wobei es sich um Schenkel 14, 14', 14*, 14** von Spannbügeln handeln kann. Dabei ist nicht nur eine symmetrische Anordnung der Schenkel 14, 14' oder 14* möglich, sondern auch eine asymmetrische Anordnung von Schenkeln 14* und 14**. Durch eine solche Gestaltung der Klemmplatte 31 kann eine Vielzahl unterschiedlicher Schenkelabstände realisiert werden, wobei in Fig. 14 zwei Beispiele angegeben sind, nämlich ein Abstand S1 zwischen den Schenkeln 14 und 14', und ein Abstand S2 zwischen den Schenkeln 14*, die sich jeweils seitlich neben der Klemmplatte 31 befinden. Bei einem solchen Schenkelabstand ist jedoch auch eine entsprechend lang bemessene Spannleiste 37 vorzusehen, durch die die Kraft von den Spannelementen auf die Klemmplatte 31 übertragen wird.

Die Fig. 15 zeigt einen Schnitt durch eine Trägerklemme, die mittels einer Hammerkopfschraube 23 an der Profilschiene 18 befestigt ist und einen Träger 12* einspannt. Im übrigen entspricht die Ausführung der Fig. 15 derjenigen in Fig. 8, so daß auch die Bezugszeichen für gleiche Teile entsprechend übernommen sind.

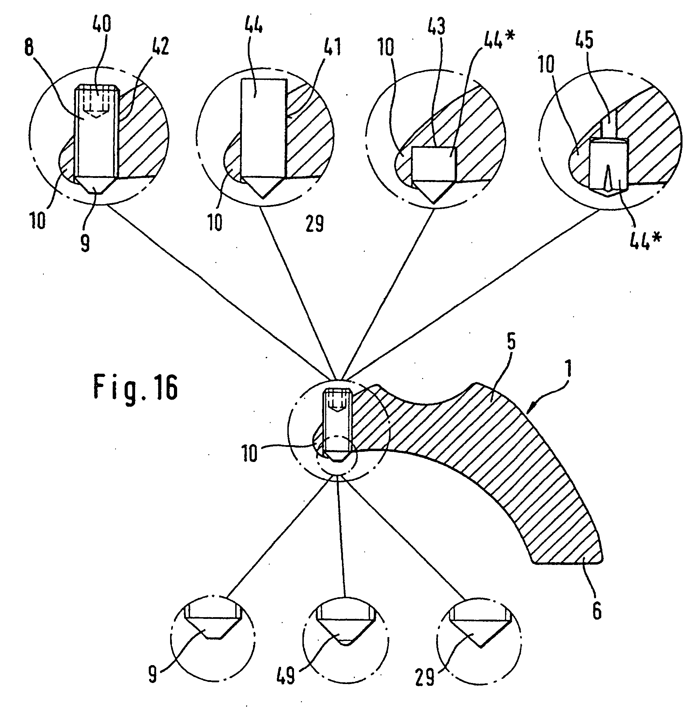

In Fig. 16 sind unterschiedliche Ausführungen von Stiften und Spitzen dargestellt. Wie bereits in den zuvor beschriebenen Figuren dargestellt, kann der Spannabschnitt 10 mit Gewindebohrungen 42 versehen sein, in die als Madenschrauben ausgeführte Gewindestifte 8 eingeschraubt sind. An dem nach unten aus dem Spannabschnitt 10 hervorstehenden Ende weist der Stift 8 die Spitze 9 auf, die im vorliegenden Fall eine kleine Abflachung besitzt. Der Stift 8 besteht aus einem harten bzw. gehärteten Material, so daß er geeignet ist, sich in das weichere Material des zu spannenden Gegenstandes einzugraben. An dem der Spitze 9 abgewandten Ende weist der Stift 8 einen Innensechskant 40 zum Einsatz eines entsprechenden Werkzeuges auf.

Der Stift 44 kann, wie im unteren Bereich der Fig. 16 dargestellt ist, eine Spitze 29 aufweisen, die vollständig kegelig ist. Alternativ hierzu ist es jedoch auch möglich, das vordere Ende kugelabschnittförmig zu gestalten, wie dies am Beispiel der Spitze 49 gezeigt ist. Im oberen Bereich der Fig. 16 ist weiterhin dargestellt, daß in dem Spannabschnitt 10 ein Sackloch 43 angeordnet ist, in dem ein Stift 44* aufgenommen wird. Dieser Stift 44* kann durch Verpressen mit dem Material des Spannabschnitts 10 befestigt sein. Es besteht außerdem die Möglichkeit, die Bohrung als Stufenbohrung 45 auszuführen, in die dann der Stift 44* eingesetzt wird.

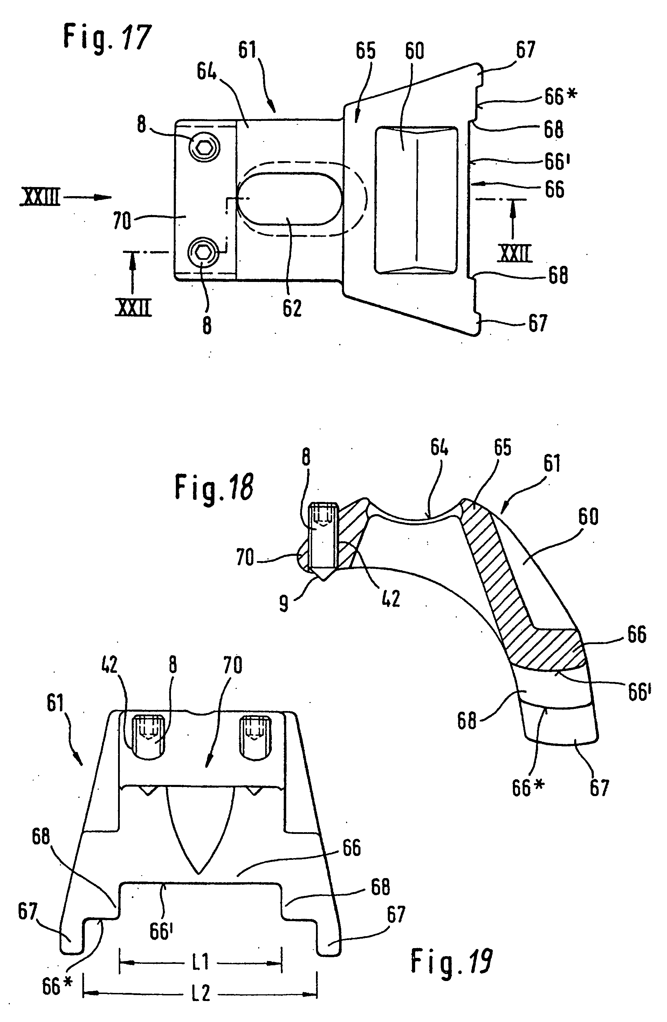

Die Fig. 17 zeigt eine Draufsicht auf eine Klemmplatte 61, deren Schnitt in Fig. 18 und Seitenansicht in Fig. 19 dargestellt sind. Diese Klemmplatte 61 weist in einer Mulde 64 ein Langloch 62 auf, wobei die Mulde 64 zwischen einem Sattel 65 und einem Spannabschnitt 70 angeordnet ist. Zu einem Nocken 66 hin ist der Sattel mit einer Vertiefung 60 versehen. Im Spannabschnitt 70 befinden sich Stifte 8 in Gewindebohrungen 42 in der gleichen Art wie zu Fig. 1 beschrieben. Am unteren Ende des Nockens 66 befinden sich an den Seiten nach unten gerichtete Vorsprünge 67, neben denen auf der Innenseite, also einander zugewandt, jeweils ein Vorsprung 68 angeordnet ist. Zwischen diesen Vorsprüngen 68 ist eine erste Lagerfläche 66' gebildet, die eine Erstreckung L1 besitzt. Demgegenüber ist die Erstreckung L2 zwischen den Vorsprüngen 67 größer. Neben den Vorsprüngen 67 sind bis zu den Absätzen 68 jeweils Teilflächen einer zweiten Lagerfläche 66* ausgebildet. Die Ausführung gemäß Fig. 17 bis 19 hat den Vorteil, daß die Klemmplatte 61 ohne Änderung für verschiedene Profilbreiten oder dergleichen eingesetzt werden kann.

## Patentansprüche

1. Trägerklemme zur Montage von Schienen, Trägern, Verbindungsteilen und dergleichen, mit einer Klemmplatte (1, 21, 31, 61), die einen Nocken (6, 26, 66) zur Abstützung auf einem Bauteil und einen Spannabschnitt (10, 30, 70) sowie mindestens einen zwischen diesen angeordneten Mittelabschnitt (5, 25, 65) zur Aufnahme eines Spannmittels (13, 23) umfaßt, wobei an dem Spannabschnitt (10, 30, 70) mindestens ein Vorsprung in Form eines Stiftes (8, 28, 44, 44*) vorgesehen ist, der als eine aus dem Spannabschnitt (10, 30, 70,) hervorstehende Spitze (9, 29, 49) ausgebildet ist,
**dadurch gekennzeichnet, daß** der Stift (8, 28, 44, 44*, 47) aus einem härteren Werkstoff besteht als die Klemmplatte (1, 21, 31, 61) und daß der Stift als Madenschraube ausgeführt und durch Verpressen mit dem Material des Spannabschnitts (10, 30, 70) befestigt ist.

2. Trägerklemme nach Anspruch 1,
**dadurch gekennzeichnet, daß** der Stift (44) in einer Durchgangsbohrung (41) eingesetzt ist.

3. Trägerklemme nach Anspruch 1,
**dadurch gekennzeichnet, daß** der Stift (8, 28) in einer Gewindebohrung (42) des Spannabschnittes (10, 30, 70) gehalten ist.

4. Trägerklemme nach Anspruch 1,
**dadurch gekennzeichnet, daß** im Spannabschnitt ein Sackloch (43) oder eine Stufenbohrung (45) vorgesehen ist.

5. Trägerklemme nach einem der Ansprüche 1 bis 4,
**dadurch gekennzeichnet, daß** zwei in einem Abstand angeordnete Stifte (8, 28, 44, 44*) vorgesehen sind, deren Spitzen (9, 29, 49) mindestens annähernd gleich weit aus dem Spannabschnitt (10, 30, 70) hervorstehen.

6. Trägerklemme nach einem der Ansprüche 1 bis 5,
**dadurch gekennzeichnet, daß** der Mittelabschnitt als Sattel (5, 25, 58, 65) ausgeführt ist.

7. Trägerklemme nach einem der Ansprüche 1 bis 6,
**dadurch gekennzeichnet, daß** in dem Mittelabschnitt (5, 25, 65) mindestens eine öffnung (2, 22, 32, 37, 62) zum Durchtritt eines Zugankers (14, 14', 23, 53) vorgesehen ist, die vorzugsweise als Langloch (2, 22, 36, 62) gestaltet ist.

8. Trägerklemme nach einem der Ansprüche 6 oder 7,
**dadurch gekennzeichnet, daß** der Sattel (5, 25, 65) an seiner Oberseite als konkave oder zylinderabschnittförmige Mulde (4, 24, 64) ausgestaltet ist und der Zuganker (14, 14', 23) unter Zwischenschaltung einer in die Mulde (4, 24, 64) gedrückten Kalotte (17) oder Spannleiste (37) auf dem Sattel (5, 25, 65) abgestützt ist.

9. Trägerklemme nach einem der Ansprüche 1 bis 8,
**dadurch gekennzeichnet, daß** an dem Nocken (6, 26, 66) zwei Vorsprünge (7, 27, 67) augebildet sind, zwischen denen sich mindestens eine Lagerfläche erstreckt.

10. Trägerklemme nach Anspruch 9,
**dadurch gekennzeichnet, daß** neben den Vorsprüngen (67) auf deren einander zugewandten Seiten jeweils ein Absatz (68) angeordnet ist, wobei eine erste Lagerfläche (66') zwischen den Absätzen (68) gebildet und die Erstreckung (L1) zwischen diesen geringer ist als eine Erstreckung (L2) zwischen den Vorsprüngen (67), die eine zweite Lagerfläche (66*) begrenzen.

## Claims

1. Arresting device for mounting rails, supports, connecting parts and the like, having an arresting plate (1, 21, 31, 61) comprising a cam (6, 26, 66) to provide support on a structural component and a bracing section (10, 30, 70), as well as at least one middle section (5, 25, 65) disposed between them for receiving a clamping member (13, 23), wherein at least one projection in the form of a pin (8, 28, 44, 44*) is provided on the bracing section (10, 30, 70), designed as a tip (9, 29, 49) projecting out from the bracing section (10, 30, 70),
**characterised in that** the pin (8, 28, 44, 44*, 47) is made from a harder material than the arresting plate (1, 21, 31, 61) and the pin is designed as a stud screw and is affixed to the material of the bracing section (10, 30, 70) by compression moulding.

2. Arresting device as claimed in claim 1,
**characterised in that** the pin (44) is inserted in a through-bore (41).

3. Arresting device as claimed in claim 1,
**characterised in that** the pin (8, 28) is retained in a threaded bore (42) of the bracing section (10, 30, 70).

4. Arresting device as claimed in claim 1,
**characterised in that** the bracing section has a blind bore (43) or a stepped bore (45).

5. Arresting device as claimed in one of claims 1 to 4,
**characterised in that** two pins (8, 28, 44, 44*) are disposed at a distance apart, the tips (9, 29, 49) of which project out from the clamping section (10, 30, 70) by at least approximately the same amount.

6. Arresting device as claimed in one of claims 1 to 5,
**characterised in that** the middle section is a saddle (5, 25, 58, 65).

7. Arresting device as claimed in one of claims 1 to 6,
**characterised in that** the middle section (5, 25, 65) has at least one opening (2, 22, 32, 37, 62) for inserting a tie anchor (14, 14', 23, 53) and is preferably a slotted hole (2, 22, 36, 62).

8. Arresting device as claimed in one of claims 6 or 7,
**characterised in that** the top face of the saddle (5, 25, 65) is concave or has a cylindrically shaped depression (4, 24, 64) and the tie anchor (14, 14', 23) is supported on the saddle (5, 25, 65) via an intermediate spherical cap (17) or clamping strip (37) pressed into the depression (4, 24, 64).

9. Arresting device as claimed in one of claims 1 to 8,
**characterised in that** the cam (6, 26, 66) has two projections (7, 27, 67), between which at least one bearing surface extends.

10. Arresting device as claimed in claim 9,
**characterised in that** a step (68) is disposed adjacent to the projections (67) on their mutually facing sides, a first bearing surface (66') being formed between the steps (68), and the distance (L1) between them is shorter than a distance (L2) between the projections (67), which bound a second bearing surface (66*).

## Revendications

1. Pince pour élément de support pour le montage de rails, de supports, d'éléments de liaison et d'éléments similaires, avec une platine de serrage (1, 21, 31, 61), qui comprend une came (6, 26, 66) pour prendre appui sur un composant et une section de serrage (10, 30, 70) ainsi qu'au moins une section centrale (5, 25, 65) disposée entre ceux-ci pour recevoir un élément de serrage (13, 23), dans laquelle au moins une avancée sous la forme d'une broche (8, 28, 44, 44*), qui est configurée comme une pointe (9, 29, 49) dépassant de la section de serrage (10, 30, 70), est prévue sur la section de serrage (10, 30, 70), **caractérisée en ce que** la pointe (8, 28, 44, 44*, 47) est composée d'un matériau plus dur que la platine de serrage (1, 21, 31, 61) et **en ce que** la pointe est réalisée comme vis sans tête et est fixée par pressage avec le matériau de la section de serrage (10, 30, 70).

2. Pince pour élément de support selon la revendication 1, **caractérisée en ce que** la broche (44) est placée dans une forure traversant de part en part (41).

3. Pince pour élément de support selon la revendication 1, **caractérisée en ce que** la broche (8, 28) est maintenue dans un trou fileté (42) de la section de serrage (10, 30, 70).

4. Pince pour élément de support selon la revendication 1, **caractérisée en ce que** dans la section de serrage est prévue une forure borgne (43) ou une forure étagée (45).

5. Pince pour élément de support selon l'une quelconque des revendications 1 à 4, **caractérisée en ce que** deux broches (8, 28, 44, 44*) disposées avec un espacement, dont les pointes (9, 29, 49) sont en dépassement d'une valeur au moins approximativement égale par rapport à la section de serrage (10, 30, 70), sont prévues.

6. Pince pour élément de support selon l'une quelconque des revendications 1 à 5, **caractérisée en ce que** la section centrale est réalisée en tant que selle (5, 25, 58, 65).

7. Pince pour élément de support selon l'une quelconque des revendications 1 à 6, **caractérisée en ce que** dans la section centrale (5, 25, 65) est prévue au moins une ouverture (2, 22, 32, 37, 62), qui est de préférence conçue comme trou oblong (2, 22, 36, 62) et qui sert au passage d'un tirant d'ancrage (14, 14', 23, 53).

8. Pince pour élément de support selon l'une quelconque des revendications 6 ou 7, **caractérisée en ce que** la selle (5, 25, 65) est conçue à sa partie supérieure comme cavité concave ou en forme de section de cylindre (4, 24, 64) et **en ce que** le tirant d'ancrage (14, 14', 23) est appuyé sur la selle (5, 25, 65) par l'intermédiaire d'une calotte (17) ou d'une lame de serrage (37) pressée dans la cavité (4, 24, 64).

9. Pince pour élément de support selon l'une quelconque des revendications 1 à 8, **caractérisée en ce que** sur la came (6, 26, 66) sont configurées deux avancées (7, 27, 67) entre lesquelles s'étend au moins une surface de logement.

10. Pince pour élément de support selon la revendication 9, **caractérisée en ce qu'**à côté des avancées (67), sur leurs côtés opposés l'un à l'autre, est disposé respectivement un épaulement (68), alors qu'une première surface de logement (66') est formée entre les épaulements (68) et que l'extension (L1) entre ceux-ci est plus faible qu'une extension (L2) entre les avancées (67) qui délimitent une deuxième surface de logement (66*).
